# EUROPEAN PATENT SPECIFICATION

(11) **EP 1 677 967 B1**
(45) Date of publication and mention of the grant of the patent: **28.01.2009**
(21) Application number: 04791443.7
(22) Date of filing: 20.10.2004
(51) Int. Cl.: B29C 65/18, B29C 65/20, F16L 9/18

(54) **PLUGGING A HOLLOW PROFILE OF A SPIRALLY WOUND PIPE**
VERSTOPFEN EINES HOHLPROFILS EINES SCHRAUBENFÖRMIG GEWUNDENEN ROHRS
COLMATAGE D'UN PROFIL CREUX D'UN TUYAU EN SPIRALE

(30) Priority: 24.10.2003 FI 20031562
(43) Date of publication of application: 12.07.2006
(73) Proprietor: Oy KWH Pipe AB, 65370 Vasa (FI)
(72) Inventor: HJERPE, Johnny, FI-65410 SUNDOM (FI)
(74) Representative: Sundman, Patrik Christoffer
(86) International application number: PCT/FI2004/050151
(87) International publication number: WO 2005/039862

(56) References cited:
- EP-A1- 0 633 126
- WO-A1-00/35660
- WO-A1-00/61978
- US-A- 5 127 442

## Description

The present invention relates to a new method for plugging the cavity in a hollow thermoplastic profile having an essentially rectangular cross section, which profile has been spirally wound to form a pipe.

Spirally wound pipes of the above kind have an extra safety compared to solid pipes due to their double wall construction. If, for example, the outer wall is damaged causing a hole, the inner wall will still be whole and prevent a medium flowing in the pipe from running out from the pipe or moisture from entering the pipe from the outside.

This requires that the spirally wound profile is plugged when the pipe is cut. For example at sleeve joins, water can flow from the inside of the pipe into the profile, if the open profile is not closed at the ends of the pipe. In drum pipe applications, in threaded joints and typically in cutting a pipe, particularly under field conditions a reliable method for closing the cavity of the profile is required.

In welding such spirally wound pipes either by means of a manual extruder or a welding automate from the in- or the otside of the pipe, it is required that the cavity in the profile has to be closed in order to prevent a melt plastic material from flowing freely into the profile cavity without generating a welding pressure which is an essential requirement for achieving a proper joint. This applies typically to spirally wound thermoplastic pipes made e.g. from polyolefins, such as polyethylene and polypropylene or polyvinylchloride.

According to previously known solutions an open profile is closed at the ends of a pipe by filling the profile openings with a plastic melt, which will weld together with the walls and solidify to form a tight plug. A problem accociated with a molten mass is that in order to achieve good adhesion to the inner walls of the pipe the surfaces must be well worked, which, however, is laborious. At the same time the amount of plastic material, which is required particularly for the preparation of larger pipes, may cause stresses at adjacent constructions during the solidification of the plastic material. During the solidification the plastic mass will shrink which leads to stresses particularly in the welded joints formed during the manufacture of the pipe, but also in the welded joints between the melt plug and the profile corners.

According to another previously known method the profile is cut either in a right or in an inclined angle in relation to the middle line of the profile and perpendicularly to the middle line of the pipe. A plastic plate is then welded onto the open end of the profile by butt welding or by means of an manual extruder. The surfaces between which a welded joint shall be provided must be pretreated. In addition, controlling of the welding pressure and a high precision are required when the welding process is carried out. There is also a risk that too much of the welding joint is rubbed away when the welding joint around the plate is rubbed. It is difficult to control this visually afterwards. For carrying out this method high precision is required, particularly concerning positioning of the plastic plate so that the angles to the middle line of profile and to the pipe are correct, which is a prerequisite for the later achievement of a reliable and tight joint between two pipes, the ends of which are prepared in this way.

An object of the present invention is to provide a method for closing the cavity in the profile at a desired site of a spirally wound pipe at the ends of the pipe or at any site along the length of the pipe, either from the inside or from the outside of the pipe. This is achieved by a method which is characterized in that a slit is cut into the wall of the profile in the outer wall or inner wall of the pipe, said slit extending over the whole width of the cavity in the profile, a thermoplastic plate having a cross section matching with the length and the width of the slit, and a height which is larger than the height of the profile, is inserted into the profile through said slit and is welded to the inside of the side walls of the profile, after the surfaces inside the profile and on the thermoplastic plate to be joined together have been worked and heated to a molten state. The outer joint between the thermoplastic plate and the edges of the slit is closed. This method enables in a simple manner plugging of the cavity in the profile very reliably. In addition, there is a minimal influence on the structure of the pipe in form of suctions and stresses.

According to an advantageous embodiment, a rectangular slit extending traversely to the longitudinal direction of the profile is cut in the profile. The slit can be cut with an overhand cutter or another suitable tool.

The slit can also be made in an angle of 30 - 90° in relation to the middle line of the profile, the slit having the form of a parallelogram, the end surfaces of which extending preferably in the same level as the radially in the pipe directed side walls of the profile. Thereafter the surfaces inside the profile, on which a welding joint is intended to be formed, are worked through the slit in order to provide a fresh surface, simultaneously as the edges of the slit are slightly beveled to facilitate forming of a welding joint between the thermoplastic plate and the wall of the pipe in said slit. Said working and beveling can be carried out e.g. with an abrasive finger belt grinder or another suitable tool, by which the relevant surfaces inside the profile can be reached. Also the edge surfaces of the thermoplastic plate to be jointed together with the worked portions inside the profile as well as the portions of the side surfaces of the thermoplastic plate to be welded to the wall of the profile in the slit provided therein are worked in a corresponding manner.

The thermoplastic plates to be used in the method are prefabricated in different sizes and thicknesses so that thermoplastic plates of a right size for each pipe dimension are available on the market. The thermoplastic plate and the profile, from which the pipe is manufactured shall be of the same kind of thermoplastic material to ensure good adhesion.
When the profile is manufactured from polyethene, the thermoplastic plate may be manufactured from PE-HD, PE-MD, PE-LD, or from a thermoplastic elastomer (TPE) weldable together with the profile. When the material of the profile is e.g. PE-HD, good results are obtained by using a thermoplastic plate from PE-LD. In connection with pipes manufactured by using a profile from polypropene, the thermoplastic plate may suitably be made of polypropene with a slightly higher melt index and a lower melting point or from a TPE quality weldable together with the profile.

Heating of the two side-edges and the bottom edge of the thermoplastic plate is preferably carried out by heating said three edge surfaces simultaneously by means of a welding mirror formed to suit to the size of the relevant thermoplastic plate. The surfaces inside the profile, against which said three edges of the thermoplastic plate are intended to be welded are suitably heated with a temperature controlled heating mirror having the same dimension and the same form as said thermoplastic plate. The heating mirror is suitably so dimensioned that its width and height are larger than the width and the height of the cavity in the profile so that a portion of the profile wall, preferably between a fifth and a half thereof, is displaced and changed into a molten state when the heated heating mirror is inserted through the spilt provided in the profile wall. This ensures that fresh material is welded when the profile tolerances can cause a certain obliquity of the rectangular cross section of the profile. The heating is continued until welding beads are formed on all resulting welding surfaces, whereafter the heating mirror is removed, and the thermoplastic plate with its three edge surfaces, which have been heated to molten state, is inserted through the slit in the wall of the profile.

The thermoplastic plate is preferably dimensioned to have a height and a width enabling a sufficient welding pressure to be mainted in each joint, when the thermoplastic plate is inserted through the slit provided in the profile till the material in the welding joints ha cooled down.

The outer joint between the thermoplastic plate and the edges of the slit is then closed e.g. with a manual extruder, by butt welding or by utilizing a resistance welding method with a suitable insert.

Finally, the surface on the plugging site is worked to minimize flow resistances in the pipe if the plugging has been carried out from the inside of the pipe or to avoid the rik of entanglement during the treatment of the pipe when the plugging has been carried out from the outside of the pipe.

According to an advantageous embodiment the heating mirror has a form with a width slightly tapering in direction to the free end of the heating mirror to faciliate the inserting of the heated heating mirror into the profile.

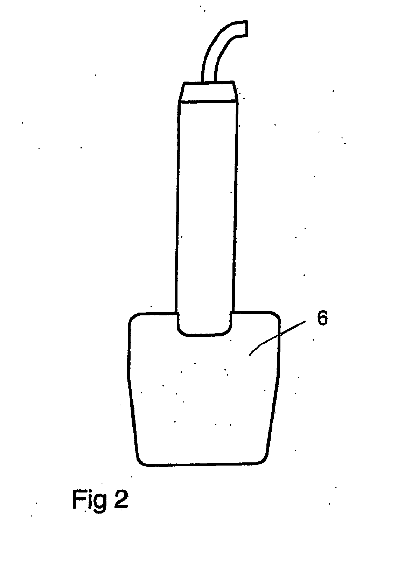

In the following the invention is described in more detail with reference to the accompanied drawings, wherein
Fig. 1 and Fig. 2 show schematically an example of a method according to the invention for making a slit on the inside and the outside of a spirally wound pipe, respectively.
Fig. 2 shows an example of a heating mirror for heating according to the invention desired portions of the inner surfaces of a hollow profile, from which a pipe is constructed by spiral winding.

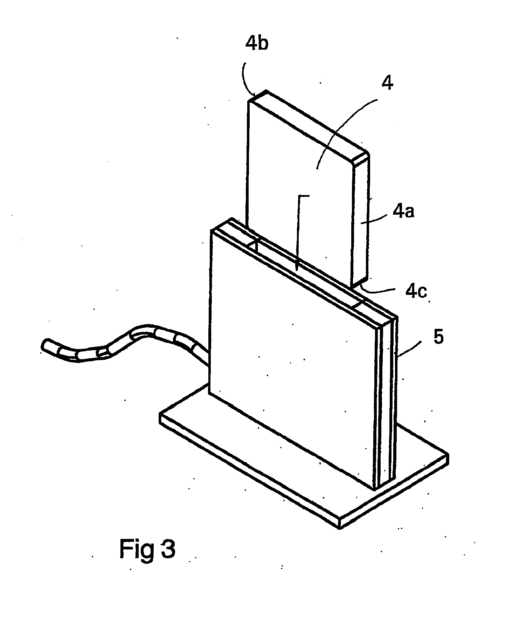

Fig. 3 shows schematically an example of a welding mirror for heating the edge surfaces of a thermoplastic profile to be utilized in the method according to the invention, and
Fig. 4 shows schematically how a thermoplastic plate according to the invention is inserted through a slit made on the inner side of the pipe in the wall of the profile from which the pipe is constructed.

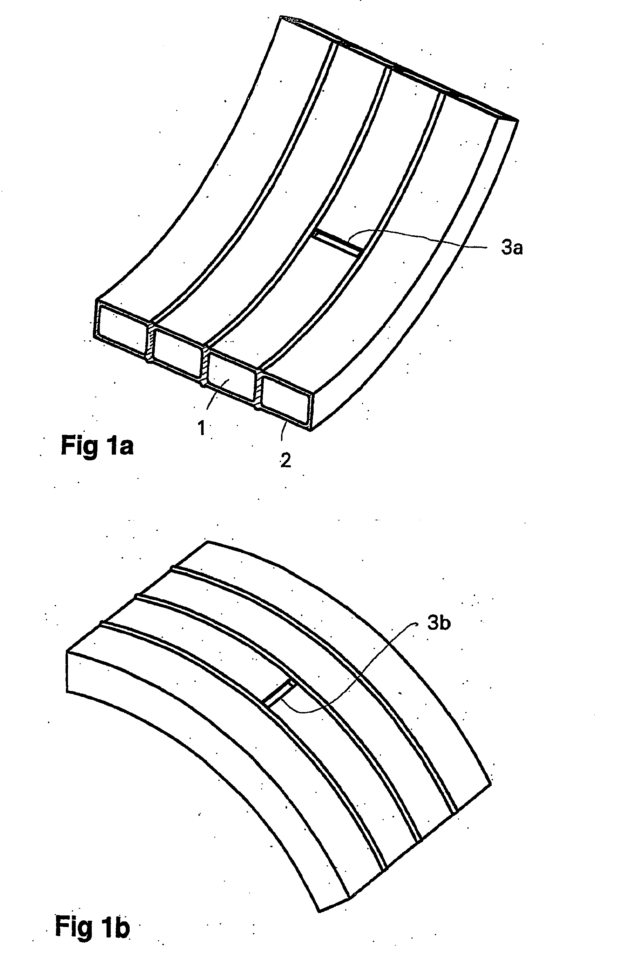

In plugging the cavity in a hollow thermoplastic profile 2 having an essentially rectangular cross section, which profile 2 has been spirally wound to form a pipe, a slit 3a, 3b is initially cut in the wall of the profile 2 on the outer or inner side of the pipe, which slit 3a, 3b extends over the whole width of the cavity in the profile. Fig. 1 shows schematically an example how a rectangular slit 3 a, 3b is cut perpendicularly to the longitudinal direction of the profile 2. A slit 3a is made in the inner side of the pipe only in such cases in which the pipe has such a large diameter that the relevant site of the inner wall of the pipe can be reached with a required equipment. The cavity 1 in the wall of the pipe is usually plugged at both ends of the pipe adjacent to the open end of the profile 2. The method according to the invention can be used for repairing a possible damage on the outer side of the pipe by closing the spirally extending passage in the wall of the pipe on both sides of the damaged site and thus preventing water or other impurities (contaminants) from entering said spirally extending passage.

The surfaces inside the profile 2, on which the welding joint is to be formed, are worked to obtain a fresh surface to ensure good adhesion. The working can suitably be carried out with an abrasive finger belt grinder, which fits into the provided slit 3a, 3b. At the same time the edges of the slit 3a, 3b are beveled to facilitate achievement of a good welding joint around the thermoplastic plate 4 in the slit 3a, 3b.

In the method prefabricated thermoplastic plates 4 of the same type of thermoplastic material as those, from which the hollow profile 2 is manufactured, are used, whereby thermoplastic plates 4 dimensioned for each pipe dimension are available.

A thermoplastic plate 4 with worked edge surfaces is inserted into a welding mirror 5 provided to heat both side edges 4a, 4b and the bottom edge 4c of the thermoplastic plate. The worked portions inside the profile 2 which are intended to come into contact with and to be welded to the heated side edges 4a, 4b and the bottom edge 4c of the thermoplastic plate are simultaneously heated with a temperature controlled heating mirror 6 having the same form as said thermoplastic plate. The heating mirror 6 is inserted into the profile through said slit 3a, 3b. The heating mirror 6 is so dimensioned that its width by a traversally extending slit 3 is slightly larger than the width of the cavity inside the profile, so that a portion of the profile wall is displaced when the heating mirror 6 is inserted into the profile 2, its height being so dimensioned that its free end will come into contact with the bottom wall of the cavity 1 over the whole width of the cavity. The heating is continued till welding beads are formed on all resulting welding surfaces. According to an advantageous embodiment the heating mirror 6 has a form with a slightly tapering width in direction to the free end of the heating mirror to faciliate the inserting of the heated heating mirror into the profile and simultaneously to enable a certain compensation of a possible obliquity of the rectangular cross section of the profile. The profile can also be slightly round.

When the heating of the edges of the thermoplastic plate and the insides of the profile 2 is ready so that the thermoplastic material has changed to a molten or plastic state, the thermoplastic plate is removed from the welding mirror 5, and the heating mirror 6 is removed from the profile 2, whereafter the thermoplastic plate is inserted through slit 3a, 3b into the profile 2 and pressed against the heated walls of the cavity 1 till the thermoplastic material has cooled down. The thermoplastic plate will then be welded to the edges of the slit 3a, 3b e.g with a manual extruder by butt welding or resistance welding with a suitable insert.

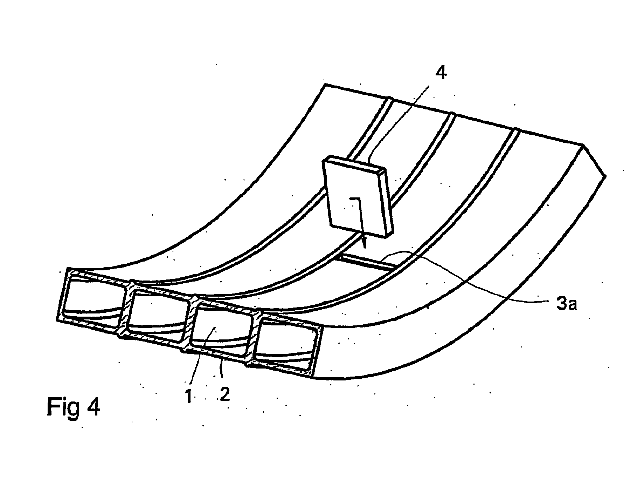

Finally, the plugging site is visually controlled and worked by removing portions of the thermoplastic plate 4 and the welding joint projecting from the pipe wall to minimize flow resistances in the pipe if the plugging has been carried out from the inside of the pipe as schematically shown in figure 4, or to avoid the risk of entanglement during the treatment of the pipe if the plugging has been carried out from the outside of the pipe.

## Claims

1. A method for plugging the cavity (1) in a hollow thermoplastic profile (2) having an essentially rectangular cross section, which profile (2) by spirally winding is formed to a pipe, **characterized in that** a slit (3a, 3b) is cut in the wall of the profile in the outer or inner side of the pipe, which slit extends over the whole width of the cavity (1) in the profile (2), a thermoplastic plate 4) having a cross section matching with the length and the width of the slit (3a, 3b), and a height which is larger than the height of the profile (2) is inserted into the profile (2) through said slit (3a, 3b) and is welded to the inside of the side walls of profile (2), after the surfaces inside the profile (2) and the thermoplastic plate (4) intended to be jointed together have been worked and heated to a molten state.

2. The method according to claim 1, **characterized in that** the slit (3a, 3b) is rectangular and is cut perpendicularly to the longitudinal direction of the profile (2).

3. The method according to claim 1, **characterized in that** the slit (3a, 3b) is cut in a angle of 30 - 90° in relation to the midddle line of the profile.

4. The method according to claim 1, **characterized in that** the surface on which a welding joint is to be formed is worked to provide a fresh surface, and the edges of the slit (3a, 3b) are beveled.

5. The method according to claim 1, **characterized in that** thermoplastic plates (4) for each pipe size are prefabricated from a thermoplastic quality which is weldable with the thermoplastic material of the profile (2), from which the pipe is manufactured.

6. The method according to claim 5, **characterized in that** the surfaces of the two side edges (4a, 4b) and the bottom edge (4c) of the thermoplastic plate (4) are heated with a suitably formed welding mirror (5) and the surfaces inside the profile (2) against which said edges (4a, 4b, 4c) are to be welded are heated with a temperature controlled heating mirror (6) of the same size and the same form as said thermoplastic plate (4).

7. The method according to claim 6, **characterized in that** the heating mirror (6) for heating the welding surfaces of the profile (2) having a transversally extending slit (3a, 3b) has a dimension which is larger than the width and the height of the cavity (1) in the profile (2) so that a portion of the profile wall is displaced and changed into a molten state when the heated heating mirror (6) is inserted through the slit (3a, 3b) made in the wall of the profile.

8. The method according to claim 7, **characterized in that** the heating with the heating mirror (6) is continued till welding beads are formed on all resulting welding surfaces.

9. The method according to claim 6, **characterized in that** the thermoplastic plate (4) has a height and a width enabling maintenance of a sufficient welding pressure in each joint when being inserted through the slit (3 a, 3b) in the profile wall till the thermoplastic material in the welding joints has cooled down.

10. The method according to claim 9, **characterized in that** the outer joint is finally closed with a manual extruder by butt welding or by using a resistance welding method with a suitable insert.

11. The method according to claim 10, **characterized in that** the surface of the plugging site is worked to minimize flow resistance when the plugging has been carried out from the inside of the pipe and to avoid a risk of entanglement during the treatment of the pipe when the plugging has been carried out from the outside of the pipe.

12. The method according to claim 7, **characterized in that** the heating mirror (6) has a form with a width slightly tapering in direction to the free end of the heating mirror (6).

## Patentansprüche

1. Verfahren zum Verschließen des Hohlraums (1) in einem hohlen thermoplastischen Profil (2) mit einem im Wesentlichen rechteckigen Querschnitt, wobei das Profil (2) durch spiralförmiges Wickeln zu einem Rohr geformt wird, **dadurch gekennzeichnet, dass** in die äußere oder innere Seite der Wand des Profils ein Spalt (3a, 3b) geschnitten wird, wobei sich der Spalt über die gesamte Breite des Hohlraums (1) des Profils (2) erstreckt, dass eine thermoplastische Platte (4) mit einem in der Länge und Breite des Spaltes (3a, 3b) übereinstimmenden Querschnitt und einer Höhe, die größer ist als die Höhe des Profils (2), durch den Spalt (3a, 3b) in das Profil (2) eingesetzt und mit der Innenseite der Seitenwände des Profils (2) verschweißt wird, nachdem die Oberflächen im Innern des Profils (2) und der thermoplastischen Platte (4), die miteinander verbunden werden sollen, in einen geschmolzenen Zustand behandelt und erhitzt worden sind.

2. Verfahren nach Anspruch 1, **dadurch gekennzeichnet, dass** der Spalt (3a, 3b) rechteckig ist und senkrecht zur Längsrichtung des Profils (2) geschnitten wird.

3. Verfahren nach Anspruch 1, **dadurch gekennzeichnet, dass** der Spalt (3a, 3b) unter einem Winkel von 30° bis 90° in Bezug auf die Längsmittelachse des Profils geschnitten ist.

4. verfahren nach Anspruch 1, **dadurch gekennzeichnet, dass** die Oberfläche, die mit einer Schweißverbindung versehen werden soll, derart bearbeitet wird, um für eine saubere Oberfläche zu sorgen, und dass die Ränder des Spaltes (3a, 3b) abgeschrägt werden.

5. Verfahren nach Anspruch 1, **dadurch gekennzeichnet, dass** die thermoplastischen Platten (4) für jede Rohrgröße aus einer thermoplastischen Güte vorgefertigt werden, welche mit dem thermoplastischen Material des Profils (2), aus welchem das Rohr gefertigt ist, verschweißbar ist.

6. Verfahren nach Anspruch 5, **dadurch gekennzeichnet, dass** die Oberflächen der beiden Seitenränder (4a, 4b) und des unteren Randes (4c) der thermoplastischen Platte (4) mit einem in geeigneter Weise geformten Schweißspiegel (5) erhitzt werden und die Oberflächen im Innern des Profils (2), mit welchem die Ränder (4a, 4b, 4c) verschweißt werden sollen, mit einem temperaturgesteuerten Heizspiegel (6) erhitzt werden, welcher die gleiche Größe und die gleiche Form wie die thermoplastische Platte (4) aufweist.

7. Verfahren nach Anspruch 6, **dadurch gekennzeichnet, dass** der Heizspiegel (6) zum Erhitzen der zu verschweißenden Oberfläche des Profils (2) einen sich in Längsrichtung erstreckenden Spalt (3a, 3b) aufweist, dessen Abmessungen größer sind als die Breite und die Höhe des Hohlraums (1) in dem Profil (2), so dass ein Teil der Profilwand verdrängt und in einen geschmolzenen Zustand überführt wird, wenn der erhitzte Heizspiegel (6) durch den in der Wand des Profils erzeugten Spalt (3a, 3b) eingesetzt wird.

8. Verfahren nach Anspruch 7, **dadurch gekennzeichnet, dass** das Erhitzen mit dem Heizspiegel (6) solange fortgeführt wird, bis sich auf allen sich ergebenden Schweißoberflächen Schweißperlen gebildet haben.

9. Verfahren nach Anspruch 6, **dadurch gekennzeichnet, dass** die thermoplastische Platte (4) eine solche Höhe und Breite aufweist, um die Aufrechterhaltung eines ausreichenden Schweißdruckes an jeder Verbindung zu ermöglichen, wenn sie durch den Spalt (3a, 3b) in die Profilwand eingesetzt wird, bis das thermoplastische Material in den Schweißverbindungen abgekühlt ist.

10. Verfahren nach Anspruch 9, **dadurch gekennzeichnet, dass** die äußere Verbindung schließlich mittels eines manuellen Extruders durch Stumpfschweißen oder unter Verwendung eines Widerstandsschweißverfahrens mit einem geeigneten Einsatz verschlossen wird.

11. Verfahren nach Anspruch 10, **dadurch gekennzeichnet, dass** die Oberfläche der VersGhlussstelle derart bearbeitet wird, um den Fließwiderstand zu minimieren, wenn der Verschließvorgang von der Innenseite des Rohres her durchgeführt worden ist, und um die Gefahr von Verwicklungen während der Bearbeitung des Rohres zu vermeiden, wenn der verschließvorgang von der Außenseite des Rohres her durchgeführt worden ist.

12. Verfahren nach Anspruch 7, **dadurch gekennzeichnet, dass** der Heizspiegel (6) eine Form mit einer sich geringfügig in Richtung des freien Endes des Heizspiegels (6) verjüngenden Breite aufweist.

## Revendications

1. Procédé d'obturation de la cavité (1) dans un profilé thermoplastique creux (2) ayant une section transversale essentiellement rectangulaire, lequel profilé (2) est formé en un conduit en étant enroulé en spirale, **caractérisé en ce qu'**une fente (3a, 3b) est taillée dans la paroi du profilé, dans le côté extérieur ou intérieur du conduit, laquelle fente s'étend sur toute la largeur de la cavité (7.) dans le profilé (2), une plaque thermoplastique (4), ayant une section transversale s'adaptant à la longueur et à la largeur de la fente (3a, 3b), et une hauteur qui est plus grande que la hauteur du profilé (2), est insérée dans le profilé (2) à travers ladite fente (3a, 3b) et est soudée à l'intérieur des parois latérales du profilé (2), après que les surfaces à l'intérieur du profilé (2) et de la plaque thermoplastique (4), devant être jointes entre elles, ont été travaillées et chauffées jusqu'à un état fondu.

2. Procédé selon la revendication 1, **caractérisé en ce que** la fente (3a, 3b) est rectangulaire et est coupée perpendiculairement à la direction longitudinale du profilé (2) .

3. Procédé selon la revendication 1, **caractérisé en ce que** la feinte (3a, 3b) est coupée suivant un angle de 30 à 90° par rapport à l'axe médian du profilé.

4. Procédé selon la revendication 1, **caractérisé en ce que** la surface sur laquelle un joint soudé doit être formé est travaillée pour présenter une surface fraîche, et les bords de la fente (3a, 3b) sont biseautés.

5. Procédé selon la revendication 1, **caractérisé en ce que** des plaques thermoplastiques (4) pour chaque taille de conduit sont préfabriquées à partir d'une qualité de matière thermoplastique qui peut être soudée à la matière thermoplastique du profilé (2) dont est constitué le conduit.

6. Procédé selon la revendication 5, **caractérisé en ce que** les surfaces des deux bords latéraux (4a, 4b) et du bord inférieur (4c) de la plaque thermoplastique (4) sont chauffées à l'aide d'un miroir (5) de soudage formé de façon appropriée et les surfaces à l'intérieur du profilé (2), contre lesquelles lesdits bords (4a, 4b, 4c) doivent être soudés, sont chauffées avec un miroir chauffant (6) à température régulée de la même taille et de la même forme que ladite plaque thermoplastique (4).

7. Procédé selon la revendication 6, **caractérisé en ce que** le miroir chauffant (6) destiné à chauffer les surfaces à souder du profilé (2) ayant une fente (3a, 3b) s'étendant transversalement a une dimension qui est supérieure à la largeur et à la hauteur de la cavité (1) dans le profilé (2) afin qu'une partie de la paroi du profilé soit déplacée et amenée dans un état fondu lorsque le miroir chauffant chauffé (6) est inséré à travers la fente (3a, 3b) pratiquée dans 7.a paroi du profilé.

8. Procédé selon la revendication 7, **caractérisé en ce que** le chauffage à l'aide du miroir chauffant (6) est prolongé jusqu'à ce que des cordons de soudure soient formées sur toutes les surfaces à souder résultantes.

9. Procédé selon la revendication 6, **caractérisé en ce que** la plaque thermoplastique (4) a une hauteur et une largeur permettant le maintien d'une pression de soudage suffisante dans chaque joint lorsqu'elle est insérée à travers la fente (3a, 3b) dans la paroi du profilé jusqu'à ce que la matière thermoplastique des joints soudés ait refroidi.

10. Procédé selon la revendication 9, **caractérisé en ce que** le joint extérieur est finalement fermé à l'aide d'une extrudeuse manuelle par soudage en bout ou par l'utilisation d'un procédé de soudage par résistance à l'aide d'un élément rapporté approprié.

11. Procédé selon la revendication 10, **caractérisé en ce que** la surface du site d'obturation est travaillé pour minimiser la résistance à l'écoulement lorsque l'obturation a été effectuée depuis l'intérieur du conduit et pour éviter un risque d'encombrement pendant le traitement du conduit t lorsque l'obturation, a été effectuée depuis l'extérieur du conduit.

12. Procédé selon la revendication 7, **caractérisé en ce que** le miroir chauffant (6) a une forme ayant une largeur diminuant légèrement en direction de l'extrémité libre du miroir chauffant (6).
